# FASCICULE DE BREVET EUROPEEN

(11) **EP 1 355 453 B1**
(45) Date de publication et mention de la délivrance du brevet: **21.05.2008**
(21) Numéro de dépôt: 03290967.3
(22) Date de dépôt: 18.04.2003
(51) Int. Cl.: H04L 12/56

(54) **Dispositif d'aiguillage à commutation et routage centralisés**
Anlage zur zentralisierten Vermittlung und Routing
Device for centralized switching and routing

(30) Priorité: 19.04.2002 FR 0204930
(43) Date de publication de la demande: 22.10.2003
(73) Titulaire: Alcatel Lucent, 75008 Paris (FR)
(72) Inventeur: Lespagnol, Albert, 78210 St. Cyr l'Ecole (FR)
(74) Mandataire: El Manouni, Josiane

(56) Documents cités:
- US-A- 6 088 356
- US-A1- 2001 038 636

## Description

L'invention concerne le domaine de l'aiguillage de paquets de données au sein d'un réseau, et plus particulièrement les dispositifs assurant les fonctions de commutation et de routage.

On entend ici par « commutation », la sélection d'une liaison entre deux points d'un réseau pour transmettre des paquets de données (niveau 2 du modèle OSI). Elle correspond au terme anglais « switching ».

Par ailleurs, on entend ici par « routage », la fonction d'acheminement de paquets de données dans un réseau (niveau 3 du modèle OSI). Il correspond au terme anglais « routing ».

La commutation et le routage sont des fonctions essentielles à la transmission de données dans les réseaux. Leur mise en oeuvre s'effectue à l'aide de commutateurs (ou « switch»), de type L2F (pour « Level 2 Forwarding »), ou de routeurs (ou « router »), de type L3F (pour « Level 3 Forwarding »).

Il existe également des dispositifs d'aiguillage « mixtes » (« switch-router») qui assurent à la fois la commutation et le routage. Mais, ces dispositifs mixtes présentent une architecture distribuée du fait de la complexité de leur mise en oeuvre et des caractéristiques techniques requises, notamment lorsque l'on souhaite obtenir des débits très élevés de type OC192c, voire supérieurs. Par exemple, dans les switch-routers de type ESR (pour « Edge Switch Router »), les fonctions de commutation et de routage sont réalisées par deux circuits dédiés distincts. Il en résulte, notamment, que l'on ne peut pas partager les fonctionnalités communes assurées par les deux circuits, telles que la mise en mémoire tampon (« buffering ») ou la gestion du trafic (« traffic management »), et qu'au sein de chaque circuit les fonctionnalités doivent être dimensionnées de manière à permettre le débit maximal, y compris lorsque le débit moyen est très inférieur au débit maximal. Par exemple, une carte de lignes de transmission en sortie d'une interface OC192c (9,6 Gbps) doit être dimensionnée de manière à supporter un flux de 25 millions de paquets de 50 bytes par secondes.

De plus, le routage nécessite des rafraîchissements fréquents de plusieurs mégabits, typiquement toutes les cinq secondes, liés à l'évolution permanente du réseau. Par conséquent, lorsque la fonction de routage est distribuée, le rafraîchissement limite notablement les performances du dispositif d'aiguillage.

L'invention a donc pour but de remédier à tout ou partie des inconvénients précités, en proposant un dispositif d'aiguillage dans lequel les fonctions de commutation et de routage sont centralisées (ou intégrées).

Plus précisément, l'invention propose à cet effet un dispositif d'aiguillage de paquets de données, comprenant :
- des ports d'entrée et des ports de sortie permettant respectivement de recevoir et de transmettre des paquets de données,
- des moyens de réception capables d'extraire des paquets de données, reçus sur les ports d'entrée, des données primaires de commutation ou de routage (telles que des adresses et ports de destination), et des données secondaires à aiguiller (commuter ou router), et leur associer une adresse de stockage,
- une mémoire pour stocker à l'adresse de stockage les données secondaires extraites par les moyens de réception,
- des moyens de commutation capables de recevoir des moyens de réception les données primaires de commutation et l'adresse de stockage et déterminer dans une table de commutation, à partir de ces données et de données stockées, des données tertiaires désignant l'un au moins des ports de sortie et de nouvelles données primaires de commutation (par exemple sous forme d'un label identifiant un lien entre points du réseau),
- des moyens de routage capables de recevoir des moyens de réception les données primaires de routage et l'adresse de stockage et déterminer dans une table de routage, à partir de ces données et de données stockées, des données tertiaires désignant l'un au moins des ports de sortie et de nouvelles données primaires de routage (par exemple sous forme d'un label identifiant un chemin),
- des moyens de contrôle capables d'extraire des moyens de commutation et des moyens de routage les données tertiaires et les nouvelles données primaires, et de les délivrer en compagnie de l'adresse de stockage, en fonction d'un critère choisi (comme par exemple « le paquet arrivé en premier » ou « le paquet associé à la qualité de service la plus élevée »),
- des moyens d'émission agencés pour extraire de la mémoire les données secondaires stockées à l'adresse de stockage et transmettre sur chaque port de sortie, désigné par les données tertiaires, les données secondaires extraites combinées aux nouvelles données primaires.

Le contrôle du trafic et la mise en mémoire tampon étant désormais partagés, le dispositif peut assurer de façon centralisée (et intégrée dans une même carte) les fonctions de commutation et de routage, généralement appelées L2F et L3F.

Selon une autre caractéristique de l'invention, d'une part, les moyens de réception sont agencés pour décomposer chaque paquet de données reçu en segments de longueurs égales, de sorte que les données secondaires soient stockées sous forme segmentée, et d'autre part, les moyens d'émission sont agencés pour recomposer les données secondaires segmentées extraites avant qu'elles ne soient transmises, afin de les combiner aux nouvelles données primaires. Cela permet avantageusement de traiter des paquets de longueurs variables, indépendamment des protocoles utilisés.

Préférentiellement, les moyens de commutation comprennent un étage de commutation de type L2F comprenant, d'une part, un module de gestion comportant une mémoire tampon de gestion pour stocker à une adresse choisie au moins les données primaires de commutation et l'adresse de stockage, communiquées par les moyens de réception, et d'autre part, un module de transfert, couplé au module de gestion, comportant une mémoire réinscriptible contenant la table de commutation et une mémoire tampon d'entrée, pour stocker l'adresse de gestion en fonction d'un critère choisi et pour communiquer l'adresse choisie au module de gestion, sur ordre. Le module de gestion est alors agencé, à réception de l'adresse choisie, pour communiquer au module de transfert une partie au moins des données primaires stockées et l'adresse de stockage, de sorte qu'il puisse déterminer dans la table de commutation, à partir des données primaires reçues, les nouvelles données primaires de commutation et les données tertiaires, et délivrer ces données sur ordre des moyens de contrôle.

Egalement de préférence, les moyens de routage comprennent un étage de routage de type L3F comprenant, d'une part, un module de gestion comportant une mémoire tampon de gestion pour stocker à une adresse choisie au moins les données primaires de routage et l'adresse de stockage, communiquées par les moyens de réception, et d'autre part, un module de transfert, couplé au module de gestion, comportant une mémoire réinscriptible contenant la table de routage et une mémoire tampon d'entrée, pour stocker l'adresse de gestion en fonction d'un critère choisi et communiquer l'adresse choisie au module de gestion, sur ordre. Le module de gestion est alors agencé, à réception de l'adresse choisie, pour communiquer au module de transfert une partie au moins des données primaires stockées et l'adresse de stockage, de sorte qu'il puisse déterminer dans la table de routage, à partir des données primaires reçues, les nouvelles données primaires de routage et les données tertiaires, et délivrer ces données sur ordre des moyens de contrôle.

Le module de transfert de l'étage de routage peut également comprendre des mémoires tampon de sortie, en nombre égal au nombre de ports de sortie, pour recevoir, d'une part, les données tertiaires et les nouvelles données primaires de la mémoire réinscriptible, et d'autre part, l'adresse de stockage du module de gestion. En variante, on peut prévoir un groupe de mémoires tampon de sortie pour chaque port de sortie, par exemple pour assurer plusieurs qualités de service différentes.

Toujours de préférence, les moyens de contrôle peuvent comprendre des mémoires tampon de sortie, en nombre au moins égal au nombre de ports de sortie, pour recevoir l'adresse de stockage et les données primaires et tertiaires issues des moyens de commutation et des moyens de routage. En variante, on peut prévoir un groupe de mémoire tampon pour chaque port de sortie, par exemple pour assurer plusieurs qualités de service différentes.

En outre, les moyens de contrôle peuvent comprendre des modules intermédiaires (de collection), en nombre égal au nombre de leurs mémoires tampon de sortie, pour stocker temporairement dans des première et seconde zones l'adresse de stockage et les données primaires et tertiaires délivrées respectivement par les moyens de commutation et les moyens de routage. Ainsi, ils peuvent délivrer sur ordre aux mémoires tampon des moyens de contrôle, en fonction du critère choisi, soit l'adresse de stockage et les données primaires et tertiaires de commutation, soit l'adresse de stockage et les données primaires et tertiaires de routage.

Dans un mode de réalisation préféré, les mémoires tampon d'entrée et de sortie sont de type « FIFO » (pour « First In First Out »).

L'invention propose également un procédé d'aiguillage de paquets de données, consistant à :
- recevoir des paquets de données sur des ports d'entrée,
- extraire des paquets de données reçus des données primaires de commutation ou de routage, et des données secondaires à aiguiller, et à leur associer une adresse choisie de stockage,
- stocker les données secondaires extraites à l'adresse de stockage,
- déterminer à partir des données primaires reçues et de données stockées dans une table de commutation ou dans une table de routage, selon que ces données reçues sont des données primaires de commutation ou de routage, des données tertiaires désignant au moins l'un des ports de sortie et de nouvelles données primaires de commutation ou de routage,
- délivrer les données tertiaires et les nouvelles données primaires de commutation ou de routage en compagnie de l'adresse de stockage, en fonction d'un critère choisi,
- extraire les données secondaires stockées à l'adresse de stockage et transmettre sur chaque port de sortie, désigné par les données tertiaires délivrées, les données secondaires extraites combinées aux nouvelles données primaires.

Ces types de commutation et de routage sont généralement appelés, respectivement, L2F et L3F.

Avantageusement, à réception des paquets de données on peut procéder à leur décomposition en segments de longueurs égales, de sorte que les données secondaires soient stockées sous forme segmentée. Dans ce cas, avant de transmettre les données secondaires aiguillées, on les recompose afin de les combiner aux nouvelles données primaires.

Egalement de préférence, avant de délivrer les données tertiaires et les nouvelles données primaires de commutation ou de routage, on peut procéder à leur mémorisation, puis à l'application du critère choisi, afin de sélectionner soit les données de routage, soit les données de commutation en vue de la transmission des données secondaires.

L'installation et le procédé selon l'invention sont particulièrement bien adaptés, bien que de façon non exclusive, aux standards de commutation tels qu'ATM, Frame based ATM, Frame relay et MPLS, et aux standards de routage tels que IP, quel que soit le média, et ceux correspondant aux protocoles sans connexion.

D'autres caractéristiques et avantages de l'invention apparaîtront à l'examen de la description détaillée ci-après, et des dessins annexés, sur lesquels :
- la figure 1 est un diagramme bloc illustrant de façon schématique un dispositif d'aiguillage selon l'invention,
- la figure 2 est un diagramme bloc détaillant de façon schématique l'étage de routage du dispositif de la figure 1,
- la figure 3 illustre de façon schématique un exemple d'organisation de la mémoire tampon du module de gestion de l'étage de routage de la figure 3,
- la figure 4 illustre de façon schématique un exemple de réalisation de la mémoire tampon du module de gestion de l'étage de routage de la figure 3,
- la figure 5 illustre de façon schématique un mode de stockage (écriture) de données dans la mémoire tampon du module de gestion de l'étage de routage de la figure 3,
- la figure 6 illustre de façon schématique un exemple de réalisation du module de transfert de l'étage de routage de la figure 3,
- la figure 7 est un diagramme bloc détaillant de façon schématique l'étage de commutation du dispositif de la figure 1,
- la figure 8 est un diagramme bloc détaillant de façon schématique l'étage de contrôle de trafic du dispositif de la figure 1,
- les figures 9A et 9B illustrent de façon schématique les signaux générés par l'horloge principale du dispositif et le lien entre cette horloge principale et des compteurs du dispositif.

Les dessins annexés sont, pour l'essentiel, de caractère certain. En conséquence, ils pourront non seulement servir à compléter l'invention, mais aussi contribuer à sa définition, le cas échéant.

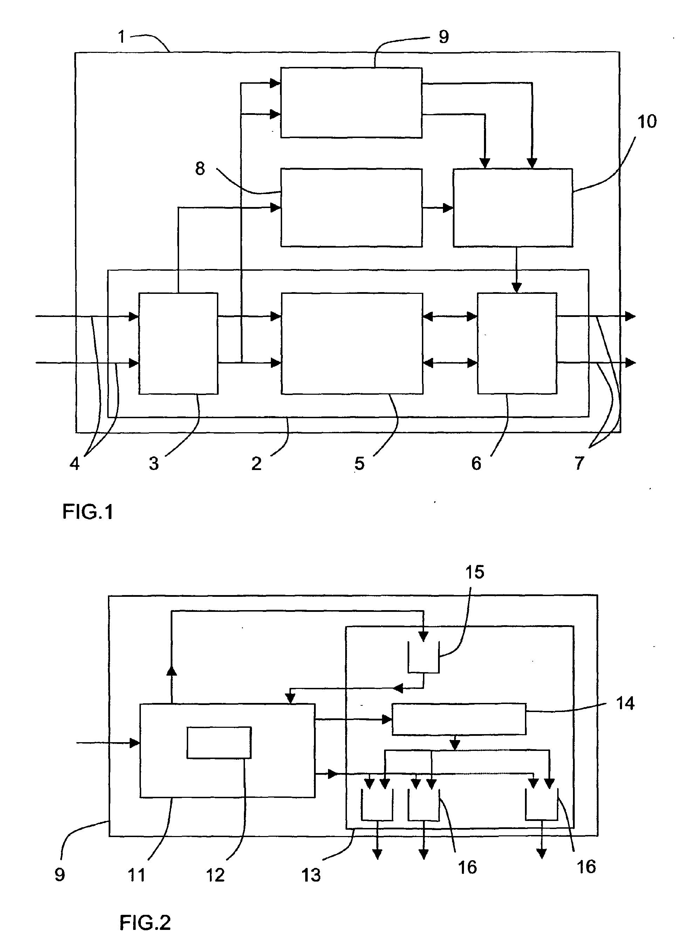

On se réfère tout d'abord à la figure 1 pour décrire un exemple de réalisation d'un dispositif d'aiguillage selon l'invention, à commutation et routage centralisés.

Le dispositif 1 comprend tout d'abord un étage de transport de données 2, comportant un sous-étage d'entrée (ou « ingress stage ») 3, muni de ports d'entrée 4 pour recevoir des paquets de données, une mémoire tampon 5, pour stocker temporairement des données à aiguiller communiquées par le sous-étage d'entrée 3, et un sous-étage de sortie (ou « egress stage ») 6, muni de ports de sortie 7 pour délivrer des données aiguillées issues, notamment, de la mémoire tampon 5.

Ce dispositif 1 comporte également un étage de commutation 8, alimenté en données de commutation par le sous-étage d'entrée 3, un étage de routage 9, alimenté en données de routage par le sous-étage d'entrée 3, et un étage de contrôle de trafic 10 alimenté par les étages de commutation 8 et de routage 9 et alimentant le sous-étage de sortie 6 en nouvelles données de commutation ou de routage.

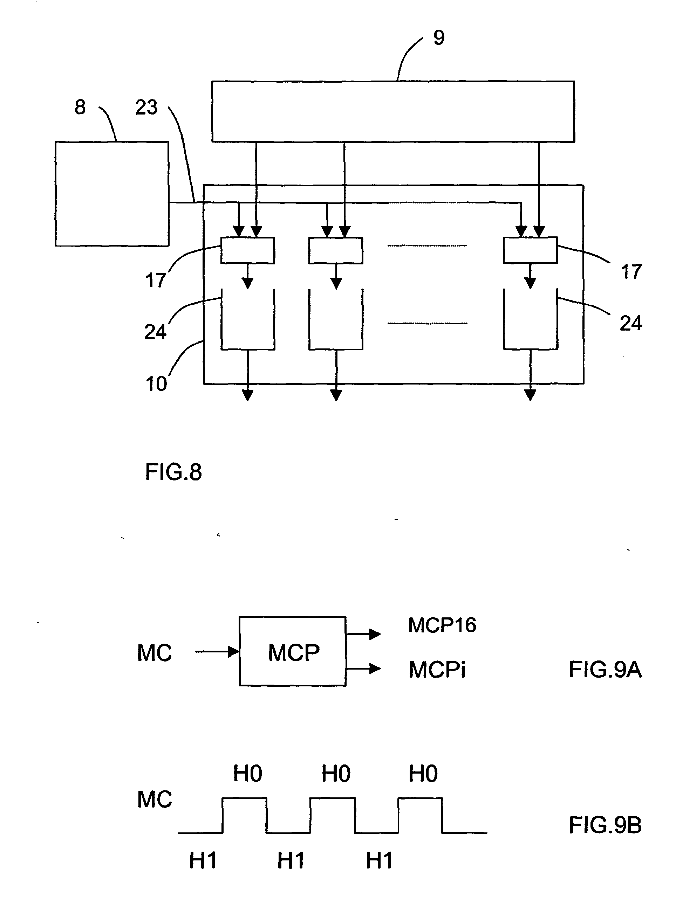

Les constituants du dispositif 1 sont synchronisés par une horloge principale MCL dont la période sert de base d'incrémentation d'un compteur principal MCP et de compteurs auxiliaires (MCP16, MCPi), comme illustré sur les figures 9A et 9B. MCPx est un compteur, modulo x, incrémenté au rythme de MCL.

L'étage de transport de données 2, l'étage de commutation 8 et une partie importante de l'étage de contrôle de trafic 10 sont décrits de façon détaillée dans les documents brevets US 5,237,564 et EP 00 440 281 dont les contenus techniques sont ici intégralement incorporés par référence. Par conséquent, seules seront décrites ici les fonctions principales de ces différents étages, et non leurs fonctions auxiliaires.

Le sous-étage d'entrée 3 est tout d'abord agencé pour recevoir sur ses n ports d'entrée 4 des paquets de données de longueurs variables, et pour extraire de ces données, d'une part, les données primaires, représentatives d'informations de commutation ou de routage qui doivent être traitées par les étages de commutation 8 ou de routage 9, et d'autre part, les données secondaires qui doivent être aiguillées (commutées ou routées).

Ces données secondaires sont transmises à la mémoire tampon 5 afin d'y être stockées à une adresse de stockage FSA(n). Par exemple, si la mémoire tampon 5 peut stocker n segments, alors un compteur MCPn donne à chaque instant l'adresse de stockage FSA(n) dans cette mémoire tampon 5 du segment arrivant. Les données primaires sont adressées à l'étage de commutation 8 ou à l'étage de routage 9 selon qu'elles comportent des informations de commutation ou de routage. En d'autres termes, si un paquet comprend des données secondaires à commuter, alors les données primaires associées sont transmises à l'étage de commutation 8, tandis que si un paquet comprend des données secondaires à router, alors les données primaires associées sont transmises à l'étage de routage 9.

Les données primaires transmises à l'étage de commutation 8 ou de routage 9 sont accompagnées de l'adresse de stockage FSA(n), qui est en fait la valeur courante de MCPn, où les données secondaires associées ont été temporairement mémorisées.

Préférentiellement, comme décrit dans les documents brevet précités, les paquets de données reçus font d'abord l'objet d'une segmentation dans le sous-étage d'entrée 3 avant que leurs données ne soient transmises à la mémoire tampon 5 et aux étages 8 et 9. Cette segmentation consiste à découper chaque paquet en segments de longueurs égales tout en conservant le lien qui les unit au niveau de la mémoire tampon 5 et des étages de commutation 8 et de routage 9. Une fois les nouvelles informations d'aiguillage déterminées par l'un des étages de commutation 8 et de routage 9, on recompose les données secondaires du paquet initial, en attente de transmission dans la mémoire tampon 5, en leur adjoignant les nouvelles informations d'aiguillage (données primaires), avant qu'elles ne soient communiquées aux ports de sortie 7.

Le nombre de segments d'un paquet reçu (PL(i)) est compté par l'étage de commutation 8 ou par l'étage de routage 9 au fur et à mesure de l'arrivée des segments.

Les données primaires sont habituellement contenues dans le premier segment du paquet reçu. Elles comportent généralement les port et adresse de la source du paquet ainsi que les port et adresse du destinataire du paquet.

Dans le cas du routage, les données primaires sont généralement des informations de routage, comme par exemple l'adresse de destination, qui servent d'index à la table de routage. L'information de routage est généralement un identifiant global (c'est-à-dire qu'aucune connexion ne doit être établie avant la transmission du paquet). De nombreux protocoles de routage fonctionnent selon ce principe. On citera notamment Internet Protocol (IP), quel qu'en soit le média. Dans le cas du protocole IP, l'identifiant global, appelé adresse IP, sert à router le paquet localement et les nouvelles données primaires délivrées par la table de routage forment un nouveau label qui servira au routage dans le dispositif suivant.

Lorsque le dispositif 1 comporte n ports d'entrée 4, chaque segment est divisé en n mots. Le temps de traitement d'un mot est égal à la période de l'horloge principale MCL. Les ports d'entrée 4 sont agencés de manière à ce qu'un segment arrivant sur le port i soit placé un mot avant un segment arrivant sur le port i-1, modulo n. De même, les ports de sortie 7 sont agencés de manière à ce qu'un segment transmis sur le port i soit placé un mot avant un segment transmis sur le port i-1, modulo n.

On se réfère maintenant aux figures 2 à 6 pour décrire un exemple de réalisation d'un étage de routage selon l'invention.

L'étage de routage 9, illustré sur la figure 2, est de type L3F. Il comporte tout d'abord un module de gestion 11 comprenant une mémoire tampon de gestion 12 dans laquelle sont stockées, à une adresse choisie i, les données primaires de routage contenues dans le premier segment transmis par le sous-étage d'entrée 3, l'adresse de stockage FSA(n) dans la mémoire tampon 5 du premier segment des données secondaires associées aux données primaires, ainsi que de préférence le nombre total de segments PL(i) du paquet associé.

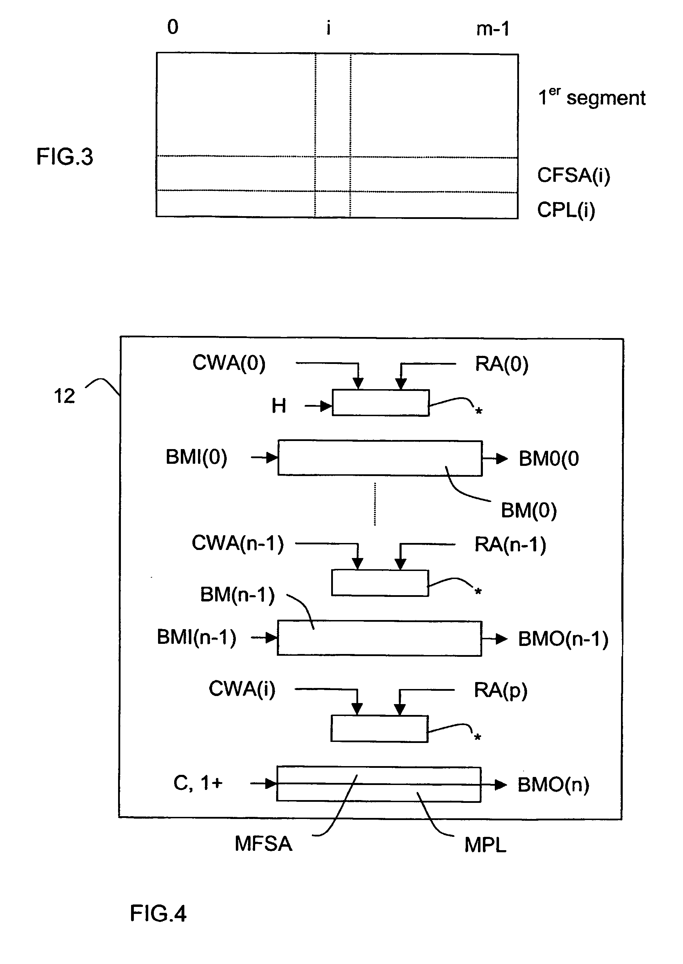

Préférentiellement, comme illustré sur la figure 3, les premiers segments et les données complémentaires (MFSA(i) et MPL(i)) sont stockés verticalement dans la mémoire tampon de gestion 12 qui fonctionne, de préférence, par décalage circulaire. Par conséquent, si la mémoire tampon 12 comporte m entrées (ou colonnes), un premier segment sera remplacé par un nouveau premier segment lorsque m paquets à router auront été reçus.

La taille m de la mémoire tampon 12 peut être facilement contrôlée en fonction du débit des paquets entrant dans le dispositif 1 et du débit de service du dispositif 1 (ou débit auquel sont routés les paquets). Préférentiellement, le débit de service est plus élevé que le débit d'entrée, de sorte que, même avec une petite taille m de mémoire tampon 12, on puisse garantir qu'aucun segment ne sera perdu (ou remplacé ; ce qui entraînerait la perte du paquet associé).

Comme cela est illustré schématiquement sur la figure 4, la mémoire tampon de gestion 12 comprend, de préférence, n sous-mémoires BM(0) à BM(n-1), identiques et indépendantes, chaque sous-mémoire BM(r) étant destinée au stockage d'un mot M(r) possédant le rang r dans tous les segments. Chaque mot est stocké dans les sous-mémoires BM(r) à l'aide d'un bus BMI(r) et extrait de cette sous-mémoire à l'aide d'un bus BMO(r).

L'horloge principale MCL synchronise la lecture (ou extraction) et l'écriture (ou stockage) de la mémoire tampon 12. Comme illustré sur la figure 9A, la demie-période d'horloge H1 est dédiée à l'écriture, tandis que la demie-période d'horloge H0 est dédiée à la lecture. Par ailleurs, comme illustré sur la figure 3, l'adressage des sous-mémoires BL(r), en lecture comme en écriture, est assurée par un multiplexeur.

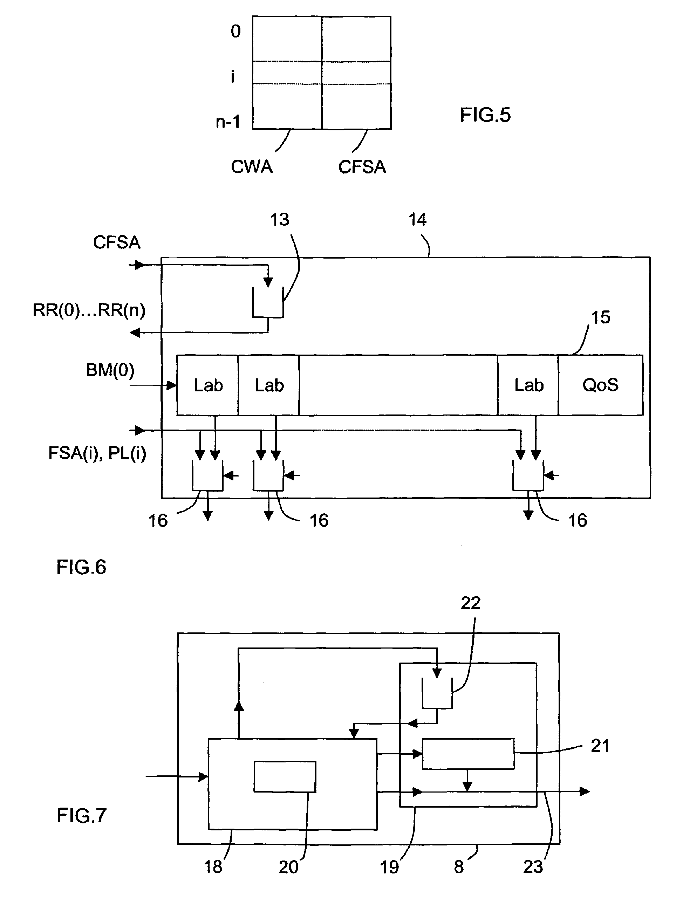

Plus précisément, comme illustré sur la figure 5, pour assurer l'écriture, on associe deux compteurs à chaque sous-mémoire BM(r). Le compteur CWA(r) contient l'adresse de la mémoire tampon 12 où l'on doit stocker un mot entrant de rang r d'un segment. Le compteur CFSA(r) contient l'adresse de la mémoire tampon 12 où se trouve stocké le premier segment d'un paquet. La mémoire tampon 12 comportant n sous-mémoires BM(r), il existe donc n jeux de deux compteurs (CWA, CFSA).

Ces compteurs sont préférentiellement agencés sous la forme d'un tampon à décalage circulaire, qui décale d'un rang les données stockées lors de chaque période d'horloge MCL consécutive à une opération d'écriture. Par exemple, la rangée « 0 » va prendre la valeur de la rangée « n-1 », la rangée « 1 » va prendre la valeur de la rangée « 0 », ..., la rangée « n-1 » va prendre la valeur de la rangée « n-2 ».

Avant que le décalage ne soit effectué, deux cas peuvent survenir. Si le premier segment d'un nouveau paquet arrive, on a alors, compte tenu du fait que i représente la valeur de CFSA(0):
- MFSA(i) : adresse de ce premier segment dans la mémoire tampon 5, donnée par la valeur du compteur principal MCP(s), où s est la taille de la mémoire tampon 5 ;
- MPL(i) = 1 ;
- CFSA(0) = CWA(0) ; et
- CWA(n-1 ) = CWA(0) + 1 (modulo m).

Cette dernière opération incrémente l'adresse où l'on doit stocker le prochain segment reçu, assurant ainsi que le segment précédemment arrivé ne sera pas écrasé. Cette opération n'est pas effectuée lorsque le segment en cours n'est pas le premier segment d'un paquet. Par conséquent, ce segment sera écrasé par les futurs segments jusqu'à ce qu'un nouveau premier segment arrive.

Si le segment reçu n'est pas le premier segment d'un nouveau paquet, on a alors, compte tenu du fait que i représente la valeur de CFSA(0):
- MPL(i) = MPL(i) + 1 (modulo m).

Lorsque l'on reçoit le dernier segment d'un paquet, l'adresse du premier segment de ce paquet dans la mémoire tampon 12 (CFSA(0)) est placée dans la file d'une mémoire tampon d'entrée 13, de préférence de type FIFO, de sorte que les données primaires reçues soient traitées en fonction de leur ordre d'arrivé dans l'étage de routage 9. Si cette mémoire FIFO d'entrée 13 contient des données, celles-ci sont traitées, tout comme les données secondaires du paquet associé. De préférence, la taille de la mémoire FIFO d'entrée 13 est choisie égale à la taille de la mémoire tampon de gestion 12.

Cette mémoire FIFO d'entrée 13 appartient à un module de transfert 14 de l'étage de routage 9, couplé au module de gestion 11, et sur lequel on reviendra plus loin.

De préférence, tous les ports des sous-étages d'entrée 3 et de sortie 6 présentent le même débit que celui des cartes d'interface de ligne couplées au dispositif 1. Mais, comme décrit dans le document brevet EP 00 440 281, on peut utiliser des cartes d'interface de ligne présentant un débit égal à un multiple entier de fois celui des ports d'entrée 4 et de sortie 7. Par exemple, lorsque le débit des ports est égal à 2,4 Gbps, on peut associer quatre ports à une interface de ligne au format OC192c.

Pour ce faire, on peut connecter chaque interface de ligne à k ports successifs [j, J+1, ..., J+k-1]. Le cas k = 1 correspond à une interface de ligne connectée à un unique port. Dans cette variante, si l'on suppose que le premier mot d'un segment est reçu sur le port j+x (avec la condition 0 ≤ x < k) les deux cas présentés ci-avant sont modifiés comme suit.

Si le premier segment d'un nouveau paquet arrive, on a alors, compte tenu du fait que i représente la valeur de CFSA(0 + x) :
- MFSA(i) : adresse de ce premier segment dans la mémoire tampon 5, donnée par la valeur du compteur principal MCP(s), où s est la taille de la mémoire tampon 5 ;
- MPL(i) = 1 ;
- CFSA(0 + x) = CWA(0+ x) ; et
- CWA(n-1 ) = CWA(0+ x) + 1 (modulo m).

Si le segment reçu n'est pas le premier segment d'un nouveau paquet, on a alors, compte tenu du fait que i représente la valeur de CFSA(0 + x) :
- MPL(i) = MPL(i) + 1 (modulo m).

Dans ce cas, parmi les k paires de compteurs (CWA, CFSA) associées à l'interface de ligne, seule la première paire est utilisée.

Comme indiqué précédemment, la lecture de la mémoire tampon 12 du module de gestion 11 s'effectue pendant la demie-période d'horloge MCL qui lui est réservée. Comme illustré sur la figure 6, chaque fois qu'un paquet a été intégralement reçu par l'étage de routage, l'adresse CFSA de son premier segment, dans la mémoire tampon 12 du module de gestion 11, est placée dans la queue de la file de la mémoire FIFO d'entrée 13. Lors de chaque demie-période d'horloge dédiée à la lecture de la mémoire tampon 12, si un mot est placé en tête de la file de la mémoire FIFO d'entrée 13, il est extrait par le module de transfert 14 et communiqué au module de gestion 12 afin qu'il lise l'unique mot stocké dans chaque sous-mémoire BM(r) de la mémoire tampon 12, à l'adresse désignée par le mot fourni par le module de transfert 14. Bien entendu, l'adresse peut varier d'une sous-mémoire à l'autre. Ainsi, toutes les informations stockées dans la colonne adressée, de la mémoire tampon 12, peuvent être simultanément lues (ou extraites).

Ces informations (données primaires, adresse de stockage FSA(n) et nombre total de segments associé PL) sont alors communiquées par le module de gestion 11 au module de transfert 14 afin qu'il détermine dans une table de routage, stockée dans une mémoire réinscriptible 15, des données tertiaires désignant chaque port de sortie 7 sur lequel les données secondaires, en attente de retransmission dans la mémoire tampon 5, devront être délivrées, et de nouvelles données primaires de routage (ou « label » (LAB)) qui correspondent aux données primaires reçues et qui doivent être associées aux données secondaires en fonction de leurs ports de sortie 7 respectifs.

Comme illustré sur la figure 6, la table de routage peut également délivrer des informations complémentaires, par exemple relatives à la qualité de service (« QoS ») associée au paquet reçu à router. Ces informations complémentaires (QoS) peuvent être également délivrées et contrôlées par l'étage de contrôle de trafic 10, de sorte qu'elles soient partagées par les étages de commutation 8 et de routage 9.

Le module de transfert 14 de l'étage de routage 9 comporte également des mémoires tampon de sortie 16, en nombre au moins égal au nombre de ports de sortie 7 du sous-étage de sortie 6. Ces mémoires de sortie 16 sont de préférence de type FIFO.

Chaque mémoire FIFO de sortie 16 est destinée à recevoir, d'une part, de la mémoire réinscriptible 15, les nouvelles données primaires et les données tertiaires destinées au port de sortie 7 qui leur est associé, et d'autre part, du module de gestion 11, l'adresse de stockage FSA(n) des données secondaires dans la mémoire tampon 5 et le nombre total de segments associé PL.

En variante, lorsque la table de routage délivre également des informations complémentaires, telles que la qualité de service (QoS), on peut associer chaque port de sortie 7 à un groupe de mémoires FIFO de sortie 16. Chaque groupe comprend alors une mémoire FIFO de sortie 16 associée à chaque qualité de service proposée.

Ces mémoires FIFO de sortie 16 alimentent, de préférence, des modules de collection 17 de l'étage de contrôle de trafic 10, sur lesquels on reviendra plus loin en référence à la figure 8.

On se réfère maintenant à la figure 7 pour décrire un exemple de réalisation d'étage de commutation de type L2F.

Cet étage de commutation 8 présente de nombreuses similitudes avec l'étage de routage 9. Il comporte un module de gestion 18, sensiblement identique au module de gestion 11 de l'étage de routage 9, tant dans ses constituants que dans son fonctionnement, et un module de transfert 19, couplé au module de gestion 18 et en partie identique au module de transfert 14 de l'étage de routage 9.

Le module de gestion 18 comprend une mémoire tampon de gestion 20 dans laquelle sont stockées, à une adresse choisie CFSA2(i), les données primaires de commutation contenues dans le premier segment transmis par le sous-étage d'entrée 3, l'adresse de stockage MFSA(i) des données secondaires associées aux données primaires, ainsi que de préférence le nombre total de segments MPL(i) du paquet associé.

Le module de transfert 19 comprend une mémoire réinscriptible 21, dans laquelle se trouve stockée une table de commutation, et une mémoire tampon d'entrée 22, dans laquelle on stocke l'adresse CFSA2(i) de la mémoire tampon 20 où se trouvent stockées les données fournies par le sous-étage d'entrée 3. Préférentiellement, la mémoire tampon d'entrée 22 est de type FIFO, de sorte que les données primaires reçues soient traitées en fonction de leur ordre d'arrivé dans l'étage de commutation 8. Contrairement au module de transfert 14 de l'étage de routage 9, le module de transfert 14 de l'étage de commutation 8 ne comprend pas de mémoires FIFO de sortie. Celles-ci se trouvent placées dans l'étage de contrôle de trafic 10, qui sera décrit plus loin, et sont ici remplacées par un bus de sortie 23.

Dans le cas de la commutation, les données primaires sont généralement sous la forme d'un identifiant local de connexion servant d'index à la table de commutation. De nombreux standards de commutation fonctionnent selon ce principe. On citera notamment ATM, Frame based ATM, Frame relay et MPLS, quel qu'en soit le média. Dans le cas de MPLS, l'identifiant local, appelé « label », sert à commuter le paquet localement et les nouvelles données primaires délivrées par la table de commutation forment un nouveau label qui servira à la commutation dans le dispositif suivant.

Le fonctionnement de l'étage de commutation 8 étant similaire à celui de l'étage de routage 9, à l'exception du transfert de données dans les mémoires FIFO de sortie, il ne sera donc pas décrit en détail. La lecture de la mémoire tampon 20 du module de gestion 18 s'effectue pendant la demie-période d'horloge MCL qui lui est réservée. Chaque fois qu'un paquet a été intégralement reçu par l'étage de commutation 8, l'adresse CFSA2 de son premier segment, dans la mémoire tampon 20 du module de gestion 18, est placée dans la queue de la file de la mémoire FIFO d'entrée 22. Lors de chaque demie-période d'horloge dédiée à la lecture de la mémoire tampon 20, si un mot est placé en tête de la file de la mémoire FIFO d'entrée 22, il est extrait par le module de transfert 19 et communiqué au module de gestion 18 afin qu'il lise l'unique mot stocké dans chaque sous-mémoire BM2(r) de la mémoire tampon 20, à l'adresse désignée par le mot fourni par le module de transfert 19. Bien entendu, l'adresse peut varier d'une sous-mémoire à l'autre. Ainsi, toutes les informations stockées dans la colonne adressée, de la mémoire tampon 20, peuvent être simultanément lues (ou extraites).

Ces informations (données primaires, adresse de stockage FSA(n) et nombre total de segments associé PL) sont alors communiquées par le module de gestion 18 au module de transfert 19 afin qu'il détermine dans la table de commutation, stockée dans la mémoire réinscriptible 21, des données tertiaires désignant chaque port de sortie 7 sur lequel les données secondaires en attente de retransmission dans la mémoire tampon 5 devront être délivrées, et de nouvelles données primaires de commutation (ou « label » (LAB)) qui correspondent aux données primaires reçues et qui doivent être associées aux données secondaires en fonction de leurs ports de sortie 7 respectifs.

La table de commutation peut également délivrer des informations complémentaires, par exemple relatives à la qualité de service (« QoS ») associée au paquet reçu à router.

Le module de transfert 19 de l'étage de commutation 8 comporte également un bus de sortie 23 destiné à recevoir, d'une part, de la mémoire réinscriptible 21, les nouvelles données primaires et les données tertiaires destinées aux différents ports de sortie 7 (ainsi qu'éventuellement les informations complémentaires, telles que la qualité de service), et d'autre part, du module de gestion 18, l'adresse de stockage FSA(n) des données secondaires dans la mémoire tampon 5 et le nombre total de segments associé PL.

Ce bus de sortie 23 alimente, de préférence, les modules de collection 17 de l'étage de contrôle de trafic 10, qui va être décrit maintenant en référence à la figure 8.

Comme indiqué précédemment, l'étage de contrôle de trafic 10 comprend des modules de collection 17, alimentés, d'une part, par le bus 23 de l'étage de commutation 8, et d'autre part, par les mémoires FIFO de sortie 16 de l'étage de routage 9, et des mémoires tampon de sortie 24 alimentées par les modules de collection 17. Ces mémoires tampon de sortie 24 sont de préférence de type FIFO.

On prévoit au moins autant de modules de collection 17 et de mémoires FIFO de sortie 24 que de ports de sortie 7. En variante, lorsque les tables de routage et de commutation délivrent des informations complémentaires, telles que la qualité de service (QoS), on peut associer chaque port de sortie 7 à un groupe de mémoires FIFO de sortie 24, et donc à un groupe de modules de collection 17. Chaque groupe comprend alors un module de collection 17 ou une mémoire FIFO de sortie 24 associée à chaque qualité de service proposée.

L'étage de contrôle de trafic 10 est chargé de contrôler l'aiguillage des paquets reçus, en fonction de leurs données primaires et, notamment, de l'éventuelle qualité de service associée.

Un seul paquet pouvant être aiguillé lors de chaque période de l'horloge principale MCL, c'est l'étage de contrôle de trafic 10 qui décide quel paquet va être aiguillé en premier, parmi ceux qui ont été récemment reçus et dont les données secondaires sont temporairement stockées dans la mémoire tampon 5.

Lorsque tous les paquets reçus doivent être routés (ou commutés), il n'y a pas de problème de conflit de priorité. Soit les paquets sont routés (ou commutés) en fonction de leur ordre d'arrivée, soit ils sont routés (ou commutés) en fonction, notamment, de la qualité de service associée.

En revanche, lorsque le dispositif 1 reçoit, dans des intervalles de temps très courts, des paquets à router et des paquets à commuter, il doit effectuer des choix selon un critère. Ces derniers peuvent devenir très compliqués à gérer lorsque la qualité de service intervient.

Les n mémoires FIFO de sortie 24 sont explorées de façon cyclique. Une mémoire FIFO 24 est lue lors de chaque période de l'horloge principale MCL, sachant qu'un cycle comporte n périodes d'horloge. Lors de la période i (modulo n), si aucun paquet n'est sur le point d'être transmis sur le port de sortie i (7), la mémoire FIFO i (24), associée, est lue et délivre son contenu (adresse FSA(n), nombre de segments associé PL et labels), de sorte qu'à la période d'horloge suivante les données secondaires associées puissent être transmises sur le port de sortie i (7) après ajout des nouvelles donnés primaires et tertiaires.

Les données de commutation et de routage parvenues dans les modules de collection 17 sont transférées sélectivement dans les mémoires FIFO 24 correspondantes en fonction d'un critère géré par l'étage de contrôle de trafic 10. Préférentiellement, si durant la période i de l'horloge principale MCL aucune donnée de commutation n'est parvenue dans le module de collection i (17) associé à la mémoire FIFO i (24) qui doit être lue, alors, si des données de routage se trouvent dans ce module de collection i (17), elles sont transférées dans la mémoire FIFO i (24), afin d'être lues.

Dans cet exemple de fonctionnement, le critère de choix est en faveur des données de commutation. Mais, bien entendu, tout autre critère de choix peut être envisagé. On peut notamment donner la priorité aux données de routage, ou fonctionner en alternance, ou encore fonctionner en mode auto-adaptatif, les priorités évoluant en fonction du trafic reçu.

Les modules de collection 17 présentés ci-avant collectent les données de routage et de commutation afin qu'elles soient extraites selon le critère de choix. Mais, en variante, ces modules 17 peuvent être utilisés par l'étage de contrôle de trafic 10 pour aller extraire les données de commutation ou de routage du bus de sortie 23 de l'étage de commutation 8 ou des mémoires FIFO de sortie 16 de l'étage de routage 9, en fonction du critère de choix.

Les étages de transport de données 2, de commutation 8, de routage 9 et de contrôle de trafic 10 présentés ci-avant ne sont donnés qu'à titre d'exemple illustratif et peuvent faire l'objet de très nombreuses variantes et adaptations. Ils peuvent notamment faire l'objet de circuits séparés, mais couplés les uns aux autres, ou d'un unique circuit, intégré(s) sur une carte électronique. Par ailleurs, ces étages sont principalement constitués de matériels électroniques, mais ils peuvent également comporter des modules logiciels, notamment destinés à gérer leurs fonctionnements respectifs et/ou conjoints.

L'invention offre également un procédé d'aiguillage de paquets de données. Celui-ci peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention. Le procédé consiste à :
- réceptionner des paquets de données sur des ports d'entrée 4,
- extraire des paquets de données reçus des données primaires de commutation ou de routage, et des données secondaires à aiguiller, et associer à ces données une adresse choisie de stockage FSA(n),
- stocker les données secondaires extraites à l'adresse de stockage FSA(n),
- déterminer à partir des données primaires reçues et de données stockées dans une table de commutation ou dans une table de routage, selon que ces données reçues sont des données primaires de commutation ou de routage, des données tertiaires désignant au moins l'un des ports de sortie 7 et de nouvelles données primaires de commutation ou de routage,
- délivrer les données tertiaires et les nouvelles données primaires de commutation ou de routage en compagnie de l'adresse de stockage FSA(n), en fonction d'un critère choisi,
- extraire les données secondaires stockées à l'adresse de stockage FSA(n) et transmettre sur chaque port de sortie 7, désigné par les données tertiaires délivrées, les données secondaires extraites combinées aux nouvelles données primaires.

A réception des paquets de données, on peut tout d'abord procéder à leur décomposition en segments de longueurs égales, de sorte que les paquets reçus puissent être traités sous une forme segmentée permettant leur aiguillage indépendamment de leur longueur. Bien entendu, dans ce cas les segments sont recomposés avant d'être transmis sur les ports de sortie 7.

Grâce à l'invention, les principales fonctionnalités d'un routeur et d'un commutateur, qui ne sont pas, par nature, liées à une interface de ligne, sont désormais centralisées. C'est notamment le cas de la mise en mémoire tampon, de la commutation, du routage, du contrôle du trafic et de la qualité de service. Cela permet de réduire notablement la complexité de l'architecture du dispositif d'aiguillage, ainsi que le coût des cartes d'interface de ligne et par conséquent celui des réseaux.

Par ailleurs, l'invention permet de s'affranchir des contraintes relatives à la proportion des paquets à router par rapport aux paquets à commuter. Il devient également possible d'envisager des situations extrêmes dans lesquelles tous les paquets sont soit routés, soit commutés, sans création de goulot d'étranglement.

D'autre part, l'invention permet d'effectuer un routage en mode « diffusion totale » (« broadcast ») ou en mode « point à multi-point » (« multicast »), sous réserve que le nombre maximal de branches de l'arbre de diffusion multi-point soit égal au nombre de ports du dispositif.

En outre, l'invention permet d'utiliser n'importe quel type de protocole sur les interfaces de ligne, et n'importe quel nombre d'interfaces de ligne, y compris à des débits de type OC192c, ou supérieurs.

Enfin, le dispositif selon l'invention peut également servir d'ESR (« Edge Switch Router »), un paquet routé par l'étage de routage pouvant alors être commuté sur un LSP (« Label Switch Path »), et un paquet commuté par l'étage de commutation, issu d'un LSP, pouvant être routé vers une interface IP, par exemple.

L'invention ne se limite pas aux modes de réalisation de dispositif et de procédé décrits ci-avant, seulement à titre d'exemple, mais elle englobe toutes les variantes que pourra envisager l'homme de l'art dans le cadre des revendications ci-après.

## Revendications

1. Dispositif d'aiguillage de paquets de données (1), **caractérisé en ce qu'**il comprend :
● des ports d'entrée (4) et des ports de sortie (7) respectivement pour recevoir et pour transmettre des paquets de données.
● des moyens de réception (3) agencés pour extraire de paquets de données, reçus par lesdits ports d'entrée (4), des données primaires de commutation ou de routage, et des données secondaires à aiguiller, et associer auxdites données secondaires une adresse choisie de stockage (FSA(n))
● une mémoire (5) pour stocker lesdites données secondaires, extraites par lesdits moyens de réception (3), à ladite adresse de stockage (FSA(n)),
● des moyens de commutation (8) agencés pour recevoir des moyens de réception (3) les données primaires de commutation et ladite adresse de stockage (FSA(n)) et déterminer à partir de ces données primaires de commutation et de données stockées dans une table de commutation (21) des données tertiaires désignant au moins l'un desdits ports de sortie (7) et de nouvelles données primaires de commutation,
● des moyens de routage (9) agencés pour recevoir des moyens de réception (3) les données primaires de routage et ladite adresse de stockage (FSA(n)) et déterminer à partir de ces données primaires de routage et de données stockées dans une table de routage (15) des données tertiaires désignant au moins l'un desdits ports de sortie (7) et de nouvelles données primaires de routage,
● des moyens de contrôle (10) agencés pour extraire des moyens de commutation (8) et des moyens de routage (9), les données tertiaires et les nouvelles données primaires, et les délivrer en compagnie de l'adresse de stockage (FSA(n)), en fonction d'un critère choisi,
● des moyens d'émission (6) agencés pour extraire de ladite mémoire (5) les données secondaires stockées à l'adresse de stockage (FSA(n)) et transmettre sur chaque port de sortie (7), désigné par lesdites données tertiaires, les données secondaires extraites combinées aux nouvelles données primaires.

2. Dispositif selon la revendication 1, **caractérisé en ce que** lesdits moyens de réception (3) sont agencés pour décomposer chaque paquet de données reçu en segments de longueurs égales, de sorte que lesdites données secondaires soient stockées sous forme segmentée, et **en ce que** lesdits moyens d'émission (6) sont agencés pour recomposer lesdites données secondaires segmentées extraites afin de les combiner aux nouvelles données primaires.

3. Dispositif selon l'une des revendications 1 et 2, **caractérisé en ce que** lesdits moyens de commutation (8) comprennent un étage de commutation de type L2F.

4. Dispositif selon la revendication 3, **caractérisé en ce que** ledit étage de commutation (8) comprend i) un module de gestion (18) comportant une mémoire tampon de gestion (20) propre à stocker à une adresse choisie au moins les données primaires de commutation et ladite adresse de stockage (FSA(n)) communiquées par les moyens de réception (3), et ii) un module de transfert (19), couplé au module de gestion (18), comportant une mémoire réinscriptible (21), dans laquelle est stockée ladite table de commutation, et une mémoire tampon d'entrée (22), propre à stocker ladite adresse choisie de gestion en fonction d'un critère choisi et à communiquer audit module de gestion (18), sur ordre, cette adresse choisie, ledit module de gestion (18) étant alors agencé, à réception de ladite adresse choisie, pour communiquer audit module de transfert (19) une partie au moins desdites données primaires stockées et ladite adresse de stockage (FSA(n)), de sorte qu'il détermine dans ladite table de commutation, à partir des données primaires reçues, lesdites nouvelles données primaires de commutation et données tertiaires, et délivre ces données sur ordre desdits moyens de contrôle (10).

5. Dispositif selon l'une des revendications 1 à 4, **caractérisé en ce que** lesdits moyens de routage (9) comprennent un étage de routage de type L3F.

6. Dispositif selon la revendication 5, **caractérisé en ce que** ledit étage de routage (9) comprend i) un module de gestion (11) comportant une mémoire tampon de gestion (12) propre à stocker à une adresse choisie au moins les données primaires de routage et ladite adresse de stockage (FSA(n)) communiquées par les moyens de réception (3), et ii) un module de transfert (14), couplé au module de gestion (11), comportant une mémoire réinscriptible (15) dans laquelle est stockée ladite table de routage et une mémoire tampon d'entrée (13), propre à stocker ladite adresse choisie de gestion en fonction d'un critère choisi et à communiquer audit module de gestion (11), sur ordre, cette adresse choisie, ledit module de gestion (11) étant alors agencé, à réception de ladite adresse choisie, pour communiquer audit module de transfert (14) une partie au moins desdites données primaires stockées et ladite adresse de stockage, de sorte qu'il détermine dans ladite table de routage, à partir des données primaires reçues, lesdites nouvelles données primaires de routage et données tertiaires, et délivre ces données sur ordre desdits moyens de contrôle (10).

7. Dispositif selon la revendication 6, **caractérisé en ce que** ledit module de transfert (14) comprend des mémoires tampon de sortie (16), en nombre égal au nombre de ports de sortie (7), et propres à recevoir lesdites données tertiaires et nouvelles données primaires, de la mémoire réinscriptible (15), et ladite adresse de stockage (FSA(n)), du module de gestion (11).

8. Dispositif selon la revendication 6, **caractérisé en ce que** ledit module de transfert (14) comprend des groupes de mémoires tampon de sortie (16), en nombre égal au nombre de ports de sortie (7), chaque groupe étant propre à recevoir lesdites données tertiaires et nouvelles données primaires, de la mémoire réinscriptible (15), et ladite adresse de stockage (FSA(n)), du module de gestion (11).

9. Dispositif selon l'une des revendications 1 à 8, **caractérisé en ce que** lesdits moyens de contrôle (10) comprennent des mémoires tampon (24), en nombre au moins égal au nombre de ports de sortie, et propres à recevoir l'adresse de stockage (FSA(n)) et les données primaires et tertiaires issues des moyens de commutation (8) et des moyens de routage (9).

10. Dispositif selon l'une des revendications 1 à 8, **caractérisé en ce que** lesdits moyens de contrôle (10) comprennent des groupes de mémoires tampon (24), en nombre égal au nombre de ports de sortie (7), et propres à recevoir l'adresse de stockage (FSA(n)) et les données primaires et tertiaires issues des étages de commutation (8) et de routage (9).

11. Dispositif selon l'une des revendications 8 et 10, **caractérisé en ce que** les mémoires tampon (16,24) d'un groupe sont associées à des qualités de service différentes.

12. Dispositif selon l'une des revendications 9 à 11, **caractérisé en ce que** lesdits moyens de contrôle (10) comprennent des modules intermédiaires (17), en nombre égal au nombre de leurs mémoires tampon (24), et propres à stocker dans des première et seconde zones l'adresse de stockage (FSA(n)) et les données primaires et tertiaires délivrées respectivement par les moyens de commutation (8) et les moyens de routage (9), de manière à délivrer sur ordre auxdites mémoires tampon (24) des moyens de contrôle (10), en fonction du critère choisi, soit ladite adresse de stockage (FSA(n)) et lesdites données primaires et tertiaires de commutation, soit ladite adresse de stockage (FSA(n)) et lesdites données primaires et tertiaires de routage.

13. Dispositif selon l'une des revendications 4 à 12, **caractérisé en ce que** certaines au moins desdites mémoires tampon (13,16,22,24) sont des mémoires de type « FIFO ».

14. Procédé d'aiguillage de paquets de données, **caractérisé en ce qu'**il consiste à :
● recevoir des paquets de données sur des ports d'entrée (4),
● extraire desdits paquets de données reçus des données primaires de commutation ou de routage, et des données secondaires à aiguiller, et à associer auxdites données secondaires une adresse choisie de stockage (FSA(n)).
● stocker les données secondaires extraites à l'adresse de stockage (FSA(n)),
● déterminer à partir des données primaires reçues et de données stockées dans une table de commutation ou dans une table de routage, selon que lesdites données reçues sont des données primaires de commutation ou de routage, des données tertiaires désignant au moins un port de sortie (7) et de nouvelles données primaires de commutation ou de routage,
● délivrer les données tertiaires et les nouvelles données primaires de commutation ou de routage en compagnie de ladite adresse de stockage, en fonction d'un critère choisi,
● extraire les données secondaires stockées à ladite adresse de stockage et transmettre sur chaque port de sortie (7) désigné par lesdites données tertiaires délivrées les données secondaires extraites combinées aux nouvelles données primaires.

15. Procédé selon la revendication 14, **caractérisé en ce qu**'à réception des paquets de données on procède à leur décomposition en segments de longueurs égales, de sorte que lesdites données secondaires soient stockées sous forme segmentée, et en ce qu'avant de transmettre les données secondaires aiguillées on recompose lesdites données secondaires segmentées extraites afin de les combiner aux nouvelles données primaires.

16. Procédé selon l'une des revendications 14 et 15, **caractérisé en ce que** la commutation est de type L2F.

17. Procédé selon l'une des revendications 14 à 16, **caractérisé en ce que** le routage est de type L3F

18. Procédé selon l'une des revendications 14 à 17, **caractérisé en ce qu**'avant de délivrer les données tertiaires et les nouvelles données primaires de commutation ou de routage, on procède à leur mémorisation puis à l'application dudit critère choisi, de manière à sélectionner soit des données de routage, soit des données de commutation en vue de la transmission des données secondaires.

19. Utilisation du procédé selon l'une des revendications précédentes avec des standards de commutation choisis dans un groupe comprenant les protocoles ATM, Frame based ATM, Frame relay et MPLS, et des standards de routage choisis dans un groupe comprenant IP et les protocoles sans connexion.

## Claims

1. A data packet handling device (1), **characterized in that** it comprises:
● input ports (4) and output ports (7) for respectively receiving and transmitting data packets,
● receiver means (3) adapted to extract primary switching or routing data and secondary data to be handled from data packets received by said input ports (4) and to associate said secondary data with a selected storage address (FSA(n)),
● a memory (5) for storing said secondary data extracted by said receiver means (3) at said storage address (FSA(n)),
● a switching stage (8) adapted to receive from the receiver means (3) the primary switching data and said storage address (FSA(n)) and to determine tertiary data designating at least one of said output ports (7) and new primary switching data from said primary switching data and data stored in a switching table (21),
● a routing stage (9) adapted to receive from the receiver means (3) the primary routing data and said storage address (FSA(n)) and to determine tertiary data designating at least one of said output ports (7) and new primary routing data from said primary routing data and data stored in a routing table (15),
● monitoring means (10) adapted to extract the tertiary data and the new primary data from the switching stage (8) and the routing stage (9) and to deliver said data and the storage address (FSA(n)) as a function of a selected criterion, and
● sending means (6) adapted to extract from said memory (5) the secondary data stored at the storage address (FSA(n)) and to send the extracted secondary data combined with the new primary data to each output port (7) designated by said tertiary data.

2. A device according to claim 1, **characterized in that** said receiver means (3) are adapted to divide each data packet received into segments of equal length, so that said secondary data is stored in segmented form, and said sending means (6) are adapted to reconstitute said segmented extracted secondary data in order to combine it with the new primary data.

3. A device according to claim 1 or claim 2, **characterized in that** said switching stage (8) includes an L2F switching stage.

4. A device according to claim 3, **characterized in that** said switching stage (8) includes i) a management module (18) including a management buffer memory (20) adapted to store at a selected address at least the primary switching data and said storage address (FSA(n)) communicated by the receiver means (3) and ii) a transfer module (19) coupled to the management module (18) and including a rewritable memory (21) in which said switching table is stored and an input buffer memory (22) adapted to store said selected management address as a function of a selected criterion and to communicate said selected address to said management module (18) on command, in which case said management module (18) is adapted, on receiving said selected address, to communicate to said transfer module (19) at least some of said stored primary data and said storage address (FSA(n)) for it to determine said new primary switching data and tertiary data in said switching table on the basis of the received primary data and to deliver said data on the instructions of said monitoring means (10).

5. A device according to any one of claims 1 to 4, **characterized in that** said routing stage (9) includes an L3F routing stage.

6. A device according to claim 5, **characterized in that** said routing stage (9) includes i) a management module (11) including a management buffer memory (12) adapted to store at a selected address at least the primary routing data and said storage address (FSA(n)) communicated by the receiver means (3) and ii) a transfer module (14) coupled to the management module (11) and including a rewritable memory (15) in which said routing table is stored and an input buffer memory (13) adapted to store said selected management address as a function of a selected criterion and to communicate said selected address to said management module (11) on command, in which case said management module is adapted, on receiving said selected address, to communicate at least some of said stored primary data and said storage address to said transfer module (14) for it to determine said new primary routing data and tertiary data in said routing table from the received primary data and to deliver said data on the instructions of said monitoring means (10).

7. A device according to claim 6, **characterized in that** said transfer module (14) has the same number of output buffer memories (16) as there are output ports (7), which output buffer memories (16) are adapted to receive said tertiary data and said new primary data from the rewritable memory (15) and said storage address (FSA(n)) from the management module (11).

8. A device according to claim 6, **characterized in that** said transfer module (14) includes the same number of groups of output buffer memories (16) as there are output ports (7) and each group is adapted to receive said tertiary data and said new primary data from the rewritable memory (15) and said storage address (FSA(n)) from the management module (11).

9. A device according to any one of claims 1 to 8, **characterized in that** said monitoring means (10) include at least the same number of buffer memories (24) as there are output ports and said buffer memories (24) are adapted to receive the storage address (FSA(n)) and the primary and tertiary data coming from the switching stage (8) and the routing stage (9).

10. A device according to any one of claims 1 to 8, **characterized in that** said monitoring means (10) include the same number of buffer memory groups (24) as there are output ports (7) and buffer memory groups (24) are adapted to receive the storage address (FSA(n)) and the primary data and the secondary data from the switching stage (8) and the routing stage (9).

11. A device according to either claim 8 or claim 10, **characterized in that** the buffer memories (16, 24) of a group are associated with different qualities of service.

12. A device according to any one of claims 9 to 11, **characterized in that** said monitoring means (10) include the same number of intermediate modules (17) as there are buffer memories (24) and said intermediate modules (17) are adapted to store the storage address (FSA(n)) and the primary and tertiary data respectively delivered by the switching stage (8) and by the routing stage (9) in first and second areas so as to deliver to said buffer memories (24) of the monitoring means (10), on command and as a function of the criterion selected, either said storage address (FSA(n)) and said primary and tertiary switching data or said storage address (FSA(n)) and said primary and tertiary routing data.

13. A device according to any one of claims 4 to 12, **characterized in that** at least some of buffer memories (13, 16, 22, 24) are FIFO memories.

14. A method of handling data packets, **characterized in that** it consists in:
● receiving data packets at input ports (4),
● extracting primary switching or routing data and secondary data to be handled from said received data packets and associating said secondary data with a selected storage address (FSA(n)),
● storing the secondary data extracted at the storage address (FSA(n)),
● determining tertiary data designating at least one output port (7) and new primary switching or routing data from the received primary data and data stored in a switching table or in a routing table, according to whether said received data is primary switching or routing data,
● delivering the tertiary data, the new primary switching or routing data, and said storage address as a function of a selected criterion, and
● extracting the secondary data stored at said storage address and sending the extracted secondary data combined with the new primary data to each output port (7) designated by said tertiary data delivered.

15. A method according to claim 14, **characterized in that** when data packets are received they are divided into segments of equal length so that said secondary data is stored in segmented form and said extracted segmented secondary data is reconstituted in order to combine it with the new primary data before sending the handled secondary data.

16. A method according to claim 14 or claim 15, **characterized in that** the switching is L2F switching.

17. A method according to any one of claims 14 to 16, **characterized in that** the routing is L3F routing.

18. A method according to any one of claims 14 to 17, **characterized in that** the data is stored and said selected criterion is then applied before delivering the tertiary data and the new primary switching or routing data, in order to select either routing data or switching data to send the secondary data.

19. The use of the method according to any preceding claim with switching standards selected from a group comprising ATM, frame-based ATM, frame relay, and MPLS protocols and routing standards selected from a group comprising the Internet protocol (IP) and connectionless protocols.

## Patentansprüche

1. Anlage zur Vermittlung von Datenpaketen (1), **dadurch gekennzeichnet, dass** sie Folgendes umfasst:
● Eingangsanschlüsse (4) und Ausgangsanschlüsse (7) für den Empfang bzw. die Übertragung von Datenpaketen,
● Empfangseinrichtungen (3), die entsprechend ausgeführt sind, um aus den Datenpaketen, die an den genannten Eingangsanschlüssen (4) empfangen werden, primären Vermittlungs- oder Routingdaten und sekundären, zu vermittelnden Daten auszulesen und den genannten sekundären Daten eine gewählte Speicheradresse (FSA(n)) zuzuordnen,
● einen Speicher, um die genannten sekundären Daten, die von den genannten Empfangseinrichtungen (3) ausgelesen wurden, unter der genannten Speicheradresse (FSA(n)) zu speichern,
● Vermittlungseinrichtungen (8), die entsprechend ausgeführt sind, um die primären Vermittlungsdaten und die genannte Speicheradresse (FSA(n)) von den Empfangseinrichtungen (3) zu empfangen und ausgehend von diesen primären Vermittlungsdaten und den in einer Vermittlungstabelle (21) gespeicherten Daten tertiäre Daten zu ermitteln, die mindestens einen der genannten Ausgangsanschlüsse (7) und neue primäre Vermittlungsdaten bezeichnen,
● Routingeinrichtungen (9), die entsprechend ausgeführt sind, um die primären Routingdaten und die genannte Speicheradresse (FSA(n)) von den Empfangseinrichtungen (3) zu empfangen und ausgehend von diesen primären Routingdaten und den in einer Routingtabelle (15) gespeicherten Daten tertiäre Daten zu ermitteln, die mindestens einen der genannten Ausgangsanschlüsse (7) und neue primäre Routingdaten bezeichnen,
● Steuereinrichtungen (10), die entsprechend ausgeführt sind, um die tertiären Daten und die neuen primären Daten aus den Vermittlungseinrichtungen (8) und den Routingeinrichtungen (9) auszulesen und diese zusammen mit der Speicheradresse (FSA(n)) in Abhängigkeit von einem gewählten Kriterium zu übertragen,
● Sendeeinrichtungen (6), die entsprechend ausgeführt sind, um die unter der Speicheradresse (FSA(n)) gespeicherten sekundären Daten aus dem genannten Speicher (5) auszulesen und die mit den neuen primären Daten kombinierten sekundären Daten an jeden Ausgangsanschluss (7) zu übertragen, der von den genannten tertiären Daten bezeichnet wird.

2. Anlage gemäß Anspruch 1, **dadurch gekennzeichnet, dass** die genannten Empfangseinrichtungen (3) entsprechend ausgeführt sind, um jedes empfangene Datenpaket in Segmente mit gleicher Länge zu zerlegen, so dass die genannten sekundären Daten in segmentierter Form gespeichert werden, sowie dadurch, dass die genannten Sendeeinrichtungen (6) entsprechend ausgeführt sind, um die genannten ausgelesenen segmentierten sekundären Daten neu zusammenzustellen, um diese mit den neuen primären Daten zu kombinieren.

3. Anlage gemäß einem der Ansprüche 1 und 2, **dadurch gekennzeichnet, dass** die genannten Vermittlungseinrichtungen (8) eine Vermittlungsstufe vom Typ L2F umfassen.

4. Anlage gemäß Anspruch 3, **dadurch gekennzeichnet, dass** die genannte Vermittlungsstufe (8) i) ein Verwaltungsmodul (18) umfasst, das einen Verwaltungspufferspeicher (20) beinhaltet, der in der Lage ist, zumindest die primären Vermittlungsdaten und die genannte Speicheradresse (FSA(n)), die von den Empfangseinrichtungen (3) übertragen werden, unter einer gewählten Adresse zu speichern, sowie ii) ein Übertragungsmodul (19), das mit dem Verwaltungsmodul (18) verbunden ist und einen wiederbeschreibbaren Speicher (21), in dem die genannte Vermittlungstabelle gespeichert ist, und einen Eingangspufferspeicher (22) beinhaltet, der in der Lage ist, die genannte gewählte Verwaltungsadresse in Abhängigkeit von einem gewählten Kriterium zu speichern und diese gewählte Adresse auf einen entsprechenden Befehl hin an das genannte Verwaltungsmodul (18) weiterzuleiten, wobei das genannte Verwaltungsmodul (18) entsprechend ausgeführt ist, um beim Empfang der genannten gewählten Adresse mindestens einen Teil der genannten gespeicherten primären Daten und die genannte Speicheradresse (FSA(n)) an das genannte Übertragungsmodul (19) weiterzuleiten, damit dieses in der genannten Vermittlungstabelle ausgehend von den empfangenen primären Daten die genannten neuen primären Vermittlungsdaten und die tertiären Daten ermittelt und diese Daten auf einen entsprechenden Befehl hin an die Steuereinrichtungen (10) überträgt.

5. Anlage gemäß einem der Ansprüche 1 bis 4, **dadurch gekennzeichnet, dass** die genannten Routingeinrichtungen (9) eine Routingstufe vom Typ L3F umfassen.

6. Anlage gemäß Anspruch 5, **dadurch gekennzeichnet, dass** die genannte Routingstufe (9) i) ein Verwaltungsmodul (11) umfasst, das einen Verwaltungspufferspeicher (12) beinhaltet, der in der Lage ist, zumindest die primären Routingdaten und die genannte Speicheradresse (FAS(n)), die von den Empfangseinrichtungen (3) übertragen werden, unter einer gewählten Adresse zu speichern, sowie ii) ein Übertragungsmodul (14), das mit dem Verwaltungsmodul (11) verbunden ist und das einen wiederbeschreibbaren Speicher (15), in dem die genannte Routingtabelle gespeichert ist, und einen Eingangspufferspeicher (13) beinhaltet, der in der Lage ist, die genannte Verwaltungsadresse, die in Abhängigkeit von einem gewählten Kriterium ausgewählt wurde, zu speichern und diese gewählte Adresse auf einen entsprechenden Befehl hin an das genannte Verwaltungsmodul (11) weiterzuleiten, wobei das genannte Verwaltungsmodul (11) entsprechend ausgeführt ist, um beim Empfang der genannten gewählten Adresse zumindest einen Teil der genannten gespeicherten primären Daten und die genannte Speicheradresse an das Übertragungsmodul (14) weiterzuleiten, damit dieses in der genannten Routingtabelle ausgehend von den empfangenen primären Daten die genannten neuen primären Routingdaten und die tertiären Daten ermittelt und diese Daten auf einen entsprechenden Befehl hin an die genannten Steuereinrichtungen (10) weiterleitet.

7. Anlage gemäß Anspruch 6, **dadurch gekennzeichnet, dass** das genannte Übertragungsmodul (14) Ausgangspufferspeicher (16) umfasst, deren Anzahl der Anzahl an Ausgangsanschlüssen (7) entspricht und die in der Lage sind, die genannten tertiären Daten und die neuen primären Daten vom wiederbeschreibbaren Speicher (15) und die genannte Speicheradresse (FSA(n)) vom Verwaltungsmodul (11) zu empfangen.

8. Anlage gemäß Anspruch 6, **dadurch gekennzeichnet, dass** das genannte Übertragungsmodul (14) Gruppen von Ausgangspufferspeichern (16) umfasst, deren Anzahl der Anzahl an Ausgangsanschlüssen (7) entspricht, wobei jede Gruppe in der Lage ist, die genannten tertiären Daten und die neuen primären Daten vom wiederbeschreibbaren Speicher (15) und die genannte Speicheradresse (FSA(n)) vom Verwaltungsmodul (11) zu empfangen.

9. Anlage gemäß einem der Ansprüche 1 bis 8, **dadurch gekennzeichnet, dass** die genannten Steuereinrichtungen (10) Pufferspeicher (24) umfassen, deren Anzahl der Anzahl an Ausgangsanschlüssen entspricht und die in der Lage sind, die Speicheradresse (FSA(n)) und die primären und tertiären Daten, die von den Vermittlungseinrichtungen (8) und den Routingeinrichtungen (9) erstellt werden, zu empfangen.

10. Anlage gemäß einem der Ansprüche 1 bis 8, **dadurch gekennzeichnet, dass** die genannten Steuereinrichtungen (10) Gruppen von Pufferspeichern (24) umfassen, deren Anzahl der Anzahl an Ausgangsanschlüssen (7) entspricht und die in der Lage sind, die Speicheradresse (FSA(n)) und die primären und tertiären Daten, die von den Vermittlungs- (8) und Routingstufen (9) erstellt werden, zu empfangen.

11. Anlage gemäß einem der Ansprüche 8 und 10, **dadurch gekennzeichnet, dass** den Pufferspeichern (16, 24) einer Gruppe unterschiedliche Dienstgüten zugeordnet sind.

12. Anlage gemäß einem der Ansprüche 9 bis 11, **dadurch gekennzeichnet, dass** die genannten Steuereinrichtungen (10) Zwischenmodule (17) umfassen, deren Anzahl der Anzahl ihrer Pufferspeicher (24) entspricht und die in der Lage sind, die Speicheradresse (FSA(n)) und die primären und tertiären Daten, die von den Vermittlungseinrichtungen (8) und den Routingeinrichtungen (9) übermittelt werden, in ersten und zweiten Bereichen zu speichern, um den genannten Pufferspeichern (24) der Steuereinrichtungen (10) auf einen entsprechenden Befehl hin, in Abhängigkeit von dem gewählten Kriterium, entweder die genannte Speicheradresse (FSA(n)) und die genannten primären und tertiären Vermittlungsdaten oder die genannte Speicheradresse (FSA(n)) und die genannten primären und tertiären Routingdaten zu übermitteln.

13. Anlage gemäß einem der Ansprüche 4 bis 12, **dadurch gekennzeichnet, dass** es sich zumindest bei einigen der genannten Pufferspeicher (13, 16, 22, 24) um Speicher vom Typ "FIFO" handelt.

14. Verfahren zur Vermittlung von Datenpaketen, **dadurch gekennzeichnet, dass** es folgende Schritte umfasst:
● Empfang von Datenpaketen an den Eingangsanschlüssen (4),
● Auslesen der primären Vermittlungs- oder Routingdaten und der zu vermittelnden sekundären Daten aus den genannten empfangenen Datenpaketen und Zuordnung einer gewählten Speicheradresse (FSA(n)) zu den genannten sekundären Daten,
● Speichern der unter der Speicheradresse (FSA(n)) ausgelesenen sekundären Daten,
● Ausgehend von den empfangenen primären Daten und den gespeicherten Daten anhand einer Vermittlungstabelle oder einer Routingtabelle, je nachdem, ob es sich bei den genannten empfangenen Daten um primäre Vermittlungsdaten oder Routingdaten handelt, Ermittlung von tertiären Daten, die zumindest einen Ausgangsanschluss (7) und neue primäre Vermittlungs- oder Routingdaten bezeichnen,
● Übermittlung der tertiären Daten und der neuen primären Vermittlungs- oder Routingdaten, zusammen mit der genannten Speicheradresse, in Abhängigkeit von einem gewählten Kriterium,
● Auslesen der gespeicherten sekundären Daten unter der genannten Speicheradresse und Übertragung der ausgelesenen sekundären Daten, die mit den neuen primären Daten kombiniert werden, an jeden Ausgangsanschluss (7), der von den genannten übermittelten tertiären Daten bezeichnet wird.

15. Verfahren gemäß Anspruch 14, **dadurch gekennzeichnet, dass** die Datenpakete beim Empfang in Segmente mit gleicher Länge zerlegt werden, so dass die genannten sekundären Daten in segmentierter Form gespeichert werden, und dass die genannten segmentierten ausgelesenen sekundären Daten vor der Übertragung der vermittelten sekundären Daten neu zusammengestellt werden, um diese mit den neuen primären Daten zu kombinieren.

16. Verfahren gemäß einem der Ansprüche 14 und 15, **dadurch gekennzeichnet, dass** die Vermittlung vom Typ L2F ist.

17. Verfahren gemäß einem der Ansprüche 14 bis 16, **dadurch gekennzeichnet, dass** das Routing vom Typ L3F ist.

18. Verfahren gemäß einem der Ansprüche 14 bis 17, **dadurch gekennzeichnet, dass** die tertiären Daten und die neuen primären Vermittlungs- oder Routingdaten vor ihrer Übertragung gespeichert werden, und dass anschließend das gewählte Kriterium angewandt wird, um im Hinblick auf die Übertragung der sekundären Daten entweder die Routingdaten oder die Vermittlungsdaten auszuwählen.

19. Umsetzung des Verfahrens gemäß einem der vorstehenden Ansprüche mit Vermittlungsstandards, die aus einer Gruppe ausgewählt werden, die die Protokolle ATM, Frame based ATM, Frame Relay und MPLS umfasst, sowie mit Routingstandards, die aus einer Gruppe ausgewählt werden, die IP und verbindungsfreie Protokolle umfasst.
